# EUROPEAN PATENT APPLICATION

(11) **EP 2 801 819 A1**
(43) Date of publication of application: **12.11.2014**
(21) Application number: 13002447.4
(22) Date of filing: 08.05.2013
(51) Int. Cl.: G01N 27/12

(54) **Metal oxide chemical sensor for portable device**

(71) Applicant: Sensirion AG, 8712 Stäfa (CH)
(72) Inventor: Mayer, Felix, 8712 Stäfa (CH); Bühler, Johannes, 8610 Uster (CH)
(74) Representative: Mirza, Akram Karim

(57) **Abstract**

A chemical sensor is described with a gas sensitive metal oxide layer (11) arranged between two electrodes (26-1, 26-2, 36-1,36-2), with the electrodes being arranged above and below the layer of metal oxide.

## Description

### FIELD OF THE INVENTION

The present invention relates to an integrated chemical sensor, particularly a gas sensor, using metal oxide. The sensor is sufficiently small to be located within the exterior shell or housing of a portable electronic device such as a mobile phone, tablet and the like.

### BACKGROUND OF THE INVENTION

Portable or mobile devices originally introduced as mobile phones or electronic agendas become more and more ubiquitous. As the processing power of their internal processors grows and equally the bandwidth for communication with stationary processors, such portable devices take on more and more the role of multi-purpose tools available to consumers and specialist users alike.

It has been recognized that portable device can benefit from the presence of sensors capable of providing a chemical analysis of materials brought into contact or the vicinity of the device. Whilst there are many possible applications for such sensors, it suffices to consider for example the analysis of air surrounding the portable device. Such an analysis can be useful for multiple purposes such as testing for hazardous gases, breath analysis for general medical purposes or driving fitness, and the like.

It is further known to use high-temperature chemoresistors with a semiconducting metal oxide (MOX) as sensitive material. Typically a layer of the sensitive material is deposited onto a pair of metal electrodes. When used as a gas sensor, the gaseous species is adsorbed on the metal oxide and acts as an electron donor or acceptor. The related change in conductivity across the layer is measured and analyzed to determine the species and/or its concentration.

When applying such a MOX sensor as an integrated sensor within a portable device, it is seen as important to provide a sensor with a compact design.

### SUMMARY OF THE INVENTION

Hence, according to a first aspect of the invention, there is provided a chemical sensor comprising at least one layer of a metal oxide arranged between two electrodes to determine the resistance across the layer, wherein the electrodes are arranged above and below the layer of metal oxide.

Accordingly, the electrodes are separated vertically taking the plane of the layer or a substrate onto which the layer is deposited as reference.

When manufacturing smaller metal oxide sensors, it is seen as an advantage to arrange the electrodes and the metal oxide as a vertical stack of layers. The advantage can arise particularly from reducing the distance between the electrodes and hence the thickness of the MOX layer to less than 10µm or, more preferably, to a range between 2µm and 200nm whilst retaining a large active area or volume within the MOX layer. This reduction in the thickness of the MOX layer can be used to increase the sensitivity of the sensor. With a favorable design of the electrodes as detailed below a large proportion of the MOX layer can contribute to the measured signal, whereas in the known sensor design the active area contributing most to the signal is limited to the lowest part located in the same horizontal plane as the two electrodes. The increase in active volume can contribute again to a larger signal of the sensor.

Each of the electrodes, particularly the top electrode can be made of a porous material.

Each of the electrodes, particularly the top electrode can be patterned to form a grid, a plurality of fingers or a meandering line electrode. A characteristic length of the pattern is preferably chosen to be of the order of the diffusion constant of the gas or gases to be measured with the sensor.

The characteristic length is typically a lateral dimension of the area between two adjacent parts of the top electrode, thus ensuring that the gas molecules can migrate to the active sensor volume between the electrodes even when entering the surface of the metal oxide at a location midway between the two adjacent parts. For a porous electrode the characteristic length can be defined as the (mean) distance between the pores.

A preferred characteristic length for a patterned electrode is in the range of 1µm to 50 µm, or more preferably in the range of 1 µm to 10 µm. For a porous electrode the preferred characteristic length can be even smaller and within the range of 5 nm to 1 µm.

The top electrode can be shifted horizontally with respect to the bottom electrode. In particular, the two nearest parallel edges of a part of the top electrode and of the bottom electrode can be horizontally displaced or stepped, preferably by one or two times the diffusion constant of the gas or gases to be measured in the MOX layer.

The metal oxide layer can be structured between adjacent parts of an electrode, for example with trenches, to increase its surface.

The material of the electrodes can be selected from a noble metal material, particularly platinum, gold, rhodium, silver, or alloys thereof.

The metal oxide (MOX) layer can include tin oxide, tungsten oxide, gallium oxide, indium oxide, zinc oxide, which preferably may be applied in a high temperature environment. The layer may be further doped with heteroatoms.

The sensor is best integrated with CMOS circuitry for control and read-out onto a common substrate. At least parts of the substrate, such as a membrane carrying the sensor, can be manufactured using micromachining (MEMS) processing steps.

In a preferred embodiment of the invention, the sensor is integrated within the housing of a portable device. The portable device can be a smart phone, a handheld computer, a laptop, an electronic reader, a tablet computer, a game controller, a pointing device, a photo or a video camera, or a computer peripheral. Its housing is typically a shell of metal, glass, or plastic material and can be assembled as a unibody or from several parts. Enclosed in the housing are typically processors, drivers for parts such as screens, antennae, cameras, microphones and speakers as well as batteries to provide power to the device and its parts. A screen is typically arranged as a part of the housing or mounted behind a transparent window of the housing.

In a variant of the invention, the sensor is located within a duct behind an opening in the housing. The duct acts as confinement for the air inside the housing and can take the shape of a tube or channel formed as part of the housing or as a separate part connected to an opening in the housing. It can be a single straight or curved duct.

The opening itself can be a dedicated opening thus exclusively connecting the chemical sensor to the outside. However, given that the manufacturers of portable electronic devices strive to maintain the housing as a good protection against humidity and water, it is seen as advantageous that the opening is shared with at least one further component of the portable device requiring a similar connection to the exterior, such as a loudspeaker, a microphone or a camera. The opening can further be protected by a grill or a membrane to prevent bigger particles or unwanted components of the air from entering or blocking the duct.

The above and other aspects of the present invention together with further advantageous embodiments and applications of the invention are described in further details in the following description and figures.

### BRIEF DESCRIPTION OF THE FIGURES

FIGs. 1A and 1B show a schematic perspective view and a cross-section, respectively, of a known metal oxide gas sensor;
FIGs. 2A and 2B are a schematic perspective view and a cross-section, respectively, of a metal oxide gas sensor in accordance with an example of the invention;
FIGs. 2C and 2D are schematic perspective views of further examples of a metal oxide gas sensor in accordance with the invention;
FIGs. 3A and 3B are schematic cross-sections of further examples of a metal oxide gas sensor in accordance with the invention; and
FIGs. 4A - 4B illustrate a device in accordance with an example of the invention in a mobile electronic device.

### DETAILED DESCRIPTION

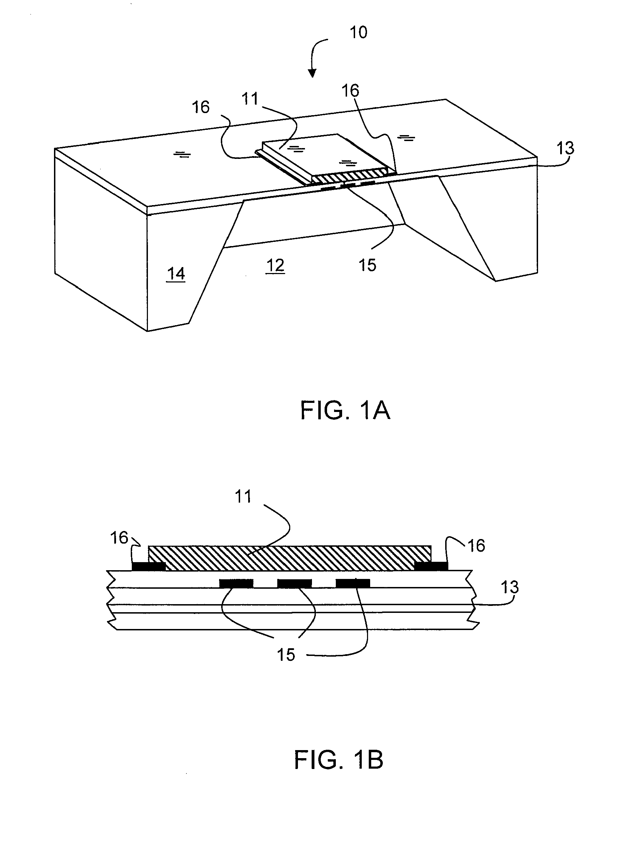

A known gas sensor 10 with a sensing layer 11 of metal oxide is shown in FIGs. 1A and 1B. The sensor is integrated with a CMOS circuitry (not shown) on a single chip. Parts of the CMOS layers 13 and handle layer 14 required for the CMOS circuit are etched away in a micro-machining (MEMS) process to form a cavity 12 at the location of the sensor. The remaining layers 13 form a thin membrane to support the actual sensor 10.

The material of the electrodes is typically a metal, for example a noble metal such as platinum, gold, rhodium, silver, or alloys thereof or Al or W. The metal-oxide used can be tin oxide, tungsten oxide, gallium oxide, indium oxide, or zinc oxide. As described in further details below the sensor can also include a micro electro-mechanical system or MEMS type heat source 15 integrated within the sensor. The sensor built integrated with its own CMOS circuitry for control and read-out. The physical dimensions of the substrate including the CMOS circuit and the MEMS sensor are less than 5mm x 5mm.

Embedded within the layers 13 are conducting elements forming the heater 15 to provide a local source of heat to heat the metal oxide 11 during operation of the sensor 10. The membrane structure 12 provides an inherent thermal insulation for the rest of the substrate with the CMOS circuit. Also, the temperature can rise rapidly around the metal oxide layer 11, while the thicker part of chip reacts due to its thermal inertia with a slower rise of temperature. By controlling the heater 15 accordingly, the metal oxide can be heated to its operating temperature of 250 to 600 degrees Celsius.

In the device of FIGs. 1, the metal oxide layer 11 is contacted by two horizontally separated electrodes 16. The electrodes are used to measure the resistance of the MOX layer 11. The electrodes are arranged on the same horizontal plane such that the main direction of the current in the layer 11 is also horizontal. In the presence of an analyte the resistance of the layer 11 changes thereby providing a measure of the concentration of the analyte in the immediate vicinity of the metal oxide layer 11.

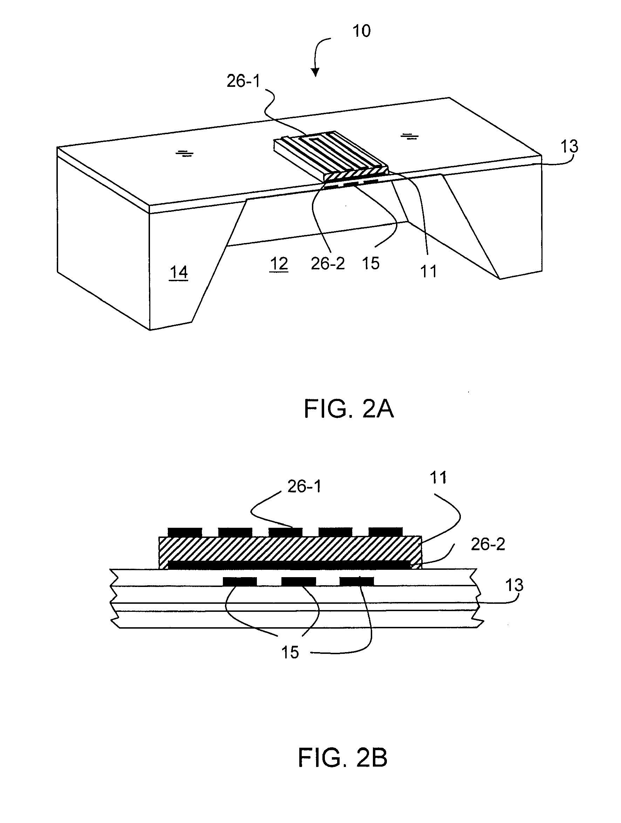

An example of a chemical sensor in accordance with an example of the present invention is shown in FIGs. 2A and 2B using the same numerals for elements common with or similar to those appearing already in FIGs. 1A and 1B.

In the sensors of FIGs. 2A and 2B the sensing layer 11 of metal oxide is embedded between an upper electrode 26-1 or set of electrodes and a lower electrode 26-2 or set of electrodes. Hence in the example a current through the sensing layer 11 for a resistance measurement would flow in essentially vertical direction.

In the example the top electrode 26-1 is a meandering line electrode to cover a large area of the metal oxide layer 11. The electrode can equally be formed as a finger-type electrode.

The characteristic length of the upper electrode structure 26-1 is the distance or gap between the meandering lines of the electrode or, in case of a fingered structure, the distance between neighboring fingers. This distance is chosen to be in the range of the penetration depth of the analyte into the active layer, which in turn is governed by the diffusion process of the analyte in the layer as well as the catalytic reaction rate The penetration depth is dependent on the type of analyte, the chemical composition of the active layer, its microstructure as well as on the operating temperature. Typical values are in the range of 10 nm to 100 nm, e.g., for CO analyte and SnO2 as active material or up to 100µm, e.g., for NO2 analyte and SnO2 as active material.

The characteristic length can be chosen specifically for a gas to be measured such that other gases lack the penetration to enter into the active area between the electrodes and/or react before entering the active area. For example, by choosing the characteristic length for a SnO2 based MOX sensor to be 10 µm or above the sensitivity towards highly reactive gases such as e.g. H2, is effectively suppressed, thereby increasing the selectivity to less reactive gases such as e.g. methane.

The thickness of the MOX layer can be controlled by the deposition process as detailed below. Using these processes MOX layers can be created with a thickness in the range from 2µm down to 200 nm.

The electrodes and MOX layer can be manufactured using methods known per se such as physical or chemical deposition from a vapor phase, sputtering, and casting. Alternatively a contact-free printing method can be used, e.g. an inkjet printing method, with several layers deposited onto each other (after a suitable drying period). In order to create larger areas, dots of one material, e.g. of electrode material or MOX material, can be deposited next to each other in an overlapping manner.

Any structures in the top electrode and/or the MOX layer can be generated using for example a wet or dry etching process, by performing the deposition process through a mask or by using a deposition process capable of writing lines with the required resolution.

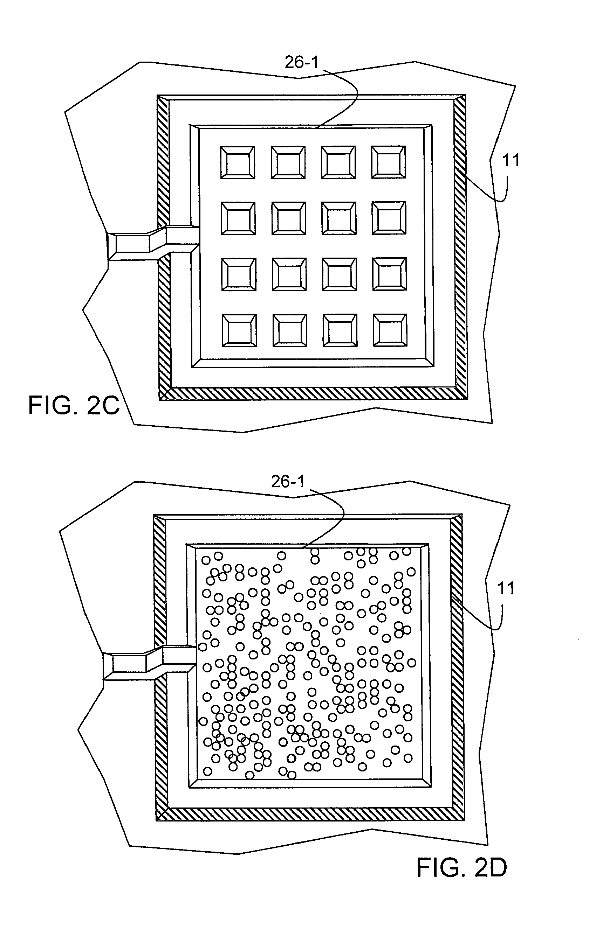

The example of FIG. 2C shows a schematic perspective view on the top electrode 26-1. In this example, the electrode 26-1 is patterned to form a grid structure. The grid structure exposes squares of the metal oxide layer 11. Gas diffusing into the layer under the squares can contribute to the measurement. The characteristic length, which in this example is defined by the lateral dimensions, i.e. the width and the length, of the squares is chosen in accordance with the expected diffusion path length of the analyte gas. As mentioned above these dimensions can be tuned making use of the known diffusion parameters and the reaction rates such that some components of a gas react before actually reaching a zone within the MOX layer, in which they could contribute significantly to the measured signal. Hence it is seen as an additional advantage of the vertically stacked sensor design of the present invention that the structure of the upper electrode can be used to increase the selectivity of the sensor.

In the example of FIG. 2D the upper electrode 26-1 is a porous electrode thus allowing the analyte to reach the surface of the MOX layer underneath. In case of such a porous electrode the characteristic length can be defined as the (mean) distance between the pores. A porous electrode can be manufactured by either controlling the deposition process or the etching process. For example when using a printing process, the electrode material can be delivered as a nanoparticulated material using inks with nanoparticles of for example Pt [e.g. Pt black], Au, Ag or C [e.g. carbon black]. The particle size in such inks can vary and range for example within the 1 nm to 100 nm range. Deposition material can also be mixed with a sacrificial material removed from the electrode in a subsequent processing step and leaving behind the desired porous structure.

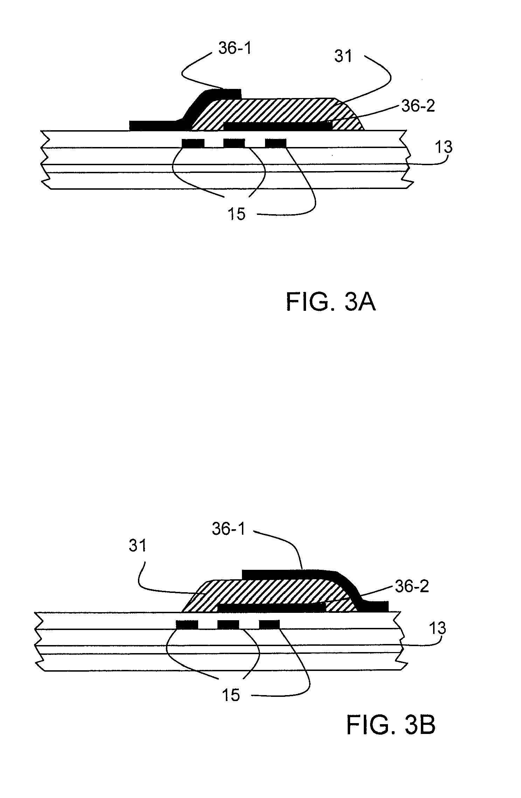

Examples of the layer structures particularly suited to the manufacturing of micromechanical sensors are shown in FIGs. 3A and 3B. The proposed structures can be manufactured without complex structuring of any given layer. The lower electrode 36-2 is completely covered by a layer of MOX material 31. The MOX layer 31 itself is partly covered by a layer of electrode material 36-1 forming the upper electrode.

This process of manufacturing the sensor with vertically arranged electrodes is not sensitive to the exact position of the edge of the upper electrode 36-1, provided it is located above the lower electrode 36-2 without being too close to the edge of the lower electrodes 36-2. Gas to be analyzed can diffuse into the MOX layer 31 along the edge of the upper electrode and thus enter the volume between the two electrodes. With regard to the location of the upper and lower electrodes this structure can be described as tiled or stepped.

Any of the above-described structures can be added to a substrate in parallel so as to either increase the active surface or volume of the sensor or to form a plurality or an assembly of cells with different characteristics.

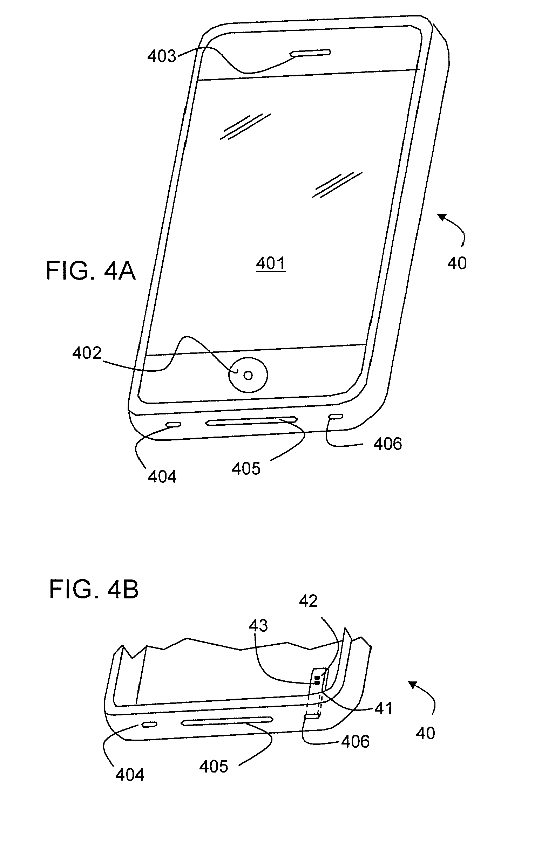

A chemical sensor in accordance with the above can be part of a portable electronic device such as a mobile phone as shown in FIG. 4A and 4B. As described above the chemical sensor needs to be of a (sufficiently small) size to fit within the limited volume available.

In FIG. 4A, the housing 40 of the mobile phone includes a front side with a screen 401 and elements like buttons 402 to let a user interact with the phone. Also shown on the front side is an opening 403 for a loudspeaker. Further openings 404,405 are located at a lower side wall of the housing 40. It is well known to mount components like microphones and loudspeakers behind such openings.

Another opening 406 is located at the lower side wall. As shown in FIG. 5B the opening 406 is linked to a tubular duct 41 passing through the interior of the housing. A chemical sensor 42 as described above and a humidity sensor 43 are both mounted along the duct 41 such that the sensitive areas of both sensors are essentially exposed air of the same composition entering the duct through the opening 406. The actual size and shape of the duct 41 depends on the volume available and the nature of the chemical sensor 42 and the humidity sensor 43, but given the physical constraints of portable mobile devices the diameter of the opening is typically in the range of less than 2mm and in the present example actually about 1mm.

The humidity sensors 43 can be manufactured as described for example in the international applications WO 2012/100362 or WO 96/19563. The humidity sensor is best combined with a temperature sensor. Such sensors are commercially available, e.g. from Sensirion™ under the trade name SHTC1. Both sensors are mounted adjacent to each other in the duct 41.

While there are shown and described presently preferred embodiments of the invention, it is to be understood that the invention is not limited thereto but may be otherwise variously embodied and practised within the scope of the following claims.

## Claims

1. A chemical sensor comprising at least one layer (11) of a metal oxide arranged between two electrodes (26-1, 26-2, 36-1, 36-2), wherein the electrodes are arranged above and below the layer of metal oxide.

2. The chemical sensor according to claim 1, wherein the above arranged electrode (26-1, 36-1) is patterned to form a grid, a plurality of fingers or a meandering line electrode.

3. The chemical sensor according to claim 2, wherein the pattern has a characteristic length in the order of the penetration depth of an analyte.

4. The chemical sensor according to claim 2, wherein the pattern has a characteristic length in the range of 1 µm - 50 µm.

5. The chemical sensor according to claim 1, wherein the above arranged electrode (26-1) is porous.

6. The chemical sensor according to claim 5, wherein the pattern has a characteristic length in the range of 5 nm - 1µm.

7. The chemical sensor according to any of the preceding claims, wherein the layer (11) of metal oxide has a thickness of less than 10µm, preferably of less than 2µm.

8. The chemical sensor according to any of the preceding claims, wherein the electrodes (26-1, 26-2,36-1,36-2)are arranged in a stepped manner.

9. The chemical sensor according to any of the preceding claims, wherein the sensor is a resistive sensor and the electrodes (26-1, 26-2,36-1,36-2)are arranged to measure the resistance of the metal oxide layer (11).

10. The chemical sensor according to any of the preceding claims, wherein the above arranged electrode (26-1, 36-1) is patterned or porous with a characteristic length chosen to prevent gases from contributing to the signal.

11. The chemical sensor according to any of the preceding claims, wherein the above arranged electrode (26-1, 36-1) and/or the layer (11) of metal oxide are deposited using contactless printing.

12. The chemical sensor according to claim 11, wherein the above arranged electrode (26-1, 36-1) and/or the layer (11) of metal oxide are formed from several overlapping deposits of material.

13. The chemical sensor according to any of the preceding claims, wherein the electrodes (26-1, 26-2, 36-1,36-2) and the metal oxide layer (11) are mounted on a substrate (13,14) comprising CMOS circuitry.

14. A portable electronic device (40) comprising a chemical sensor in accordance with any of the preceding claims.
